# EUROPÄISCHE PATENTANMELDUNG

(11) **EP 0 957 244 A2**
(43) Veröffentlichungstag der Anmeldung: **17.11.1999**
(21) Anmeldenummer: 99107463.4
(22) Anmeldetag: 28.04.1999
(51) Int. Cl.: F01N 7/08, F16L 51/02

(54) **Flexibles Leitungselement**

(30) Priorität: 09.05.1998 DE 19820863
(71) Anmelder: Witzenmann GmbH Metallschlauch-Fabrik Pforzheim, D-75175 Pforzheim (DE)
(72) Erfinder: Elsässer, Fabian, D-75334 Straubenhardt (DE); Krawietz, Tom, D-75217 Birkenfeld (DE); Pluschke, Michael, D-75305 Neuenbürg-Rotenbach (DE)
(74) Vertreter: Blumenröhr, Dietrich Dipl.-Ing.

(57) **Zusammenfassung**

Die Erfindung betrifft ein flexibles Leitungselement für Abgasleitungen von Verbrennungsmotoren mit einem mit zylindrischen Anschlußenden versehenden Metallbalg und einem koaxial innerhalb des Balges angeordneten Metallschlauch, der mit seinen innerhalb der Balganschlußenden gelegenenen Endstücken an den Balganschlußenden festgelegt ist. Hierbei sind Balg und Metallschlauch in wenigstens einem weiteren, zwischen den beiden Anschlußenden liegenden Bereich in Anlage gebracht.

## Beschreibung

Die vorliegende Erfindung betrifft ein flexibles Leitungselement, insbesondere für Abgasleitungen von Verbrennungsmotoren bei Kraftfahrzeugen mit einem mit zylindrischen Anschlußenden versehenen, schraubengangförmig oder ringgewellten Balg aus Metall und einem koaxial innerhalb des Balges angeordneten schraubengangförmig gewickelten Metallschlauch, dessen Außenquerschnitt kleiner als der lichte Innenquerschnitt des Balges ist und der mit seinen innerhalb der Balganschlußenden gelegenen Endstücken an den Balganschlußenden festgelegt ist.

Bei derartigen Leitungselementen, die insbesondere zur Schwingungsentkopplung hieran angeschlossener Leitungsteile verwendet werden, besteht ein wesentliches Problem darin, daß der Balg und der Metallschlauch bei bestimmten, vor allem im Resonanzbereich liegenden Schwingungsfrequenzen aneinanderschlagen, was eine unangenehme Geräuschentwicklung zur Folge hat. In der Vergangenheit wurde sich mit verschiedenen Lösungsansätzen beholfen, um diese Geräuschbildung auszuschließen; beispielsweise wurden zwischen Balg und Metallschlauch Dämpfungselemente aus Metalldraht wie Gestricke, Geflechtsschläuche usw. angeordnet, die die Schwingungsbewegungen von Balg und Metallschlauch dämpfen sollten; darüber hinaus wurde ebenso dazu übergegangen, einfach den Abstand zwischen Metallschlauch und Balg zu vergrößern, um hierdurch die Wahrscheinlichkeit einer gegenseitigen Berührung zu reduzieren. Es ist leicht erkennbar, daß durch diese Maßnahmen einerseits der Aufbau eines flexiblen Leitungselementes aufwendiger und somit teuerer wird und andererseits die Außenabmessungen des Leitungselementes größer ausfallen müssen, wenn der innere Abstand vergrößert wird, was einen entsprechend vergrößerten Einbauraum erforderlich macht, der in der Regel nicht vorhanden ist.

Hiervon ausgehend liegt der vorliegenden Erfindung die Aufgabe zugrunde, ein flexibles Leitungselement der eingangs genannten Art zur Verfügung zu stellen, das sich durch ein verbessertes Geräuschverhalten auszeichnet und verglichen mit den bekannten Lösungsvarianten hinsichtlich Preis und Einbauraum verbessert ist.

Diese Aufgabe wird für ein flexibles Leitungselement mit den eingangs genannten Merkmalen dadurch gelöst, daß der Balg und der Metallschlauch in wenigstens einem weiteren, zwischen den beiden Anschlußenden liegenden Bereich in gegenseitige zumindest partielle und zumindest mittelbare Anlage gebracht sind. Durch eine solche definierte Anlage, deren Position frei wählbar ist und insbesondere an die Schwingungsform von Balg und/oder Metallschlauch angepaßt sein sollte, wird zunächst einmal den gegenseitigen Relativbewegungen entgegengewirkt, da sich beide Bauteil bereits in Anlage finden und somit keine Geräusche beim Aneinanderschlagen erzeugt werden können. Darüber hinaus führt die gegenseitige Anlage aber auch zu einer Änderung des Schwingungsverhaltens von Balg und Metallschlauch.

Das heißt, bei einem herkömmlichen Bauteil kann die gesamte Axiallänge zwischen den beiden Anschlußenden frei schwingen, wodurch bereits geringe Amplituden-Anregungen durch die Bewegungen der an das Leitungselement angeschlossenen Bauteile (wie beispielsweise Abgasanlage oder Motor) im axialen Mittelabschnitt zu Resonanzen führen. Im Gegensatz dazu reduziert die gegenseitige dauerhafte Anlage von Metallschlauch und Balg in einem mittleren Axialabschnitt die freie Länge zwischen zwei Festpunkten um beispielsweise die Hälfte, so daß sich trotz hoher angularer, axialer oder lateraler Anregung drastisch reduzierte Schwingungsamplituden ergeben und somit die Wahrscheinlichkeit einer gegenseitigen Berührung von Balgkrempen und Metallschlauch in den restlichen Leitungselementabschnitten stark herabgesetzt wird. Somit läßt sich durch eine einfache konstruktive Maßnahme einerseits das Zwischenfügen eines Dämpfungsbauteils verhindern und andererseits mit minimalem gegenseitigen Abstand von Metallschlauch und Balg arbeiten, der zu entsprechend reduzierten Außenabmessungen des flexiblen Leitungselementes führt.

Bezüglich der Herstellungsart der gegenseitigen Anlage bieten sich verschiedene Möglichkeiten: Besonders vorteilhaft ist es, wenn die gegenseitige Anlage durch Umformung von Balg und/oder Metallschlauch hergestellt ist, also durch eine wenigstens partielle radiale Aufweitung des Metallschlauches und/oder eine wenigstens partielle radiale Einschnürung des Balges. Beim Balg lassen sich derartige Querschnittsreduzierungen am einfachsten dadurch erreichen, daß ein Wellental soweit nach innen gezogen wird, daß der demgemäß reduzierte Innendurchmesser dem Außendurchmesser des Metallschlauches entspricht und sich hierdurch eine gegenseitige Anlage ergibt.

Hieraus läßt sich auch erkennen, daß sich die gegenseitige Anlage im einfachsten Falle umlaufend über den gesamten Umfang von Metallschlauch und/oder Balg erstrecken kann, wobei dieses Umlaufen nicht unbedingt ringförmig erfolgen muß, sondern auch einen schraubengangförmigen oder entsprechend abgewandelten Verlauf aufweisen kann.

Besonders vorteilhaft ist es aber, wenn die gegenseitige Anlage durch Umformung von Teilbereichen erzeugt wird, wodurch die gegenseitige Anlage dadurch verbessert wird, daß in die umgeformten Bereiche eine Vorspannung induziert werden kann, die in Richtung des jeweils anderen Bauteils orientiert ist. Hierbei bieten die dem Anlagebereich benachbarten Zonen eine gewisse Nachgiebigkeit der Anlagebereiche, da sie selbst nicht am jeweils anderen Bauteil anliegen. Ein Beispiel für eine solche partielle Anlage bildet beispielsweise ein ovalförmig eingeschnürter Balg, der einen Metallschlauch mit kreisrundem Querschnitt umgibt, wodurch eine Anlage nur in den Ovalbereichen mit kleinerem Durchmesser erfolgt.

Eine partielle, also nicht ununterbrochen umlaufende Anlage bietet aber auch herstellungstechnische Vorteile, da solche punktuellen Umformungen leichter und einfacher in Metallschläuche oder Bälge mit üblicherweise rundem Querschnitt eingebracht werden können.

Derartige partielle Anlagepositionen lassen sich dennoch in einer größeren Anzahl über den Umfang oder die axiale Länge verteilt anordnen, um hierdurch die Beweglichkeit des erfindungsgemäßen Leitungselementes bzw. dessen Schwingungsverhalten an die jeweiligen Gegebenheiten anpassen zu können. Angestrebt wird zur Erzielung der eigentlichen Funktion des Leitungselementes, daß dessen Beweglichkeit nicht bzw. kaum durch die gegenseitige Anlage reduziert wird, um hierdurch die gewünschte Entkopplung bezüglich niederfrequenter Relativbewegungen und hochfrequenter Schwingungen zwischen den an das Leitungselement angeschlossenen Leitungsteilen zu erhalten.

Was die Art der Anlage betrifft, so kann eine gegenseitige reibende Anlage durchaus ausreichen, wobei die reibende Anlage eine Festlegung von Balg und Metallschlauch nicht nur in Radial-, sondern auch in Axialrichtung erzeugen sollte. Hinsichtlich der Zuverlässigkeit der gegenseitigen Festlegung und des bei einer reibenden Anlage möglichen Verschleißes der aneinander reibenden Teilbereiche kann es sich aber auch empfehlen, daß das Festlegen insbesondere durch Verschweißen oder Verpressen erfolgt; so kann beispielsweise das Verschweißen durch eine Laserschweißeinrichtung oder durch Punktschweißen durchgeführt werden, wobei es aufgrund der üblicherweise verwendeten dünnen Materialien von Balg und Metallschlauch empfehlenswert sein kann, eine zusätzliche Ringeinlage von innen oder außen mit in die Schweißverbindung einzubeziehen, die das hierbei erforderliche Material zur Verfügung stellt und ein zu schnelles Zerstören der Schweißverbindung über die Lebensdauer verhindert.

Eine solche Ringeinlage kann sich aber in vorteilhafterweise auch zur Anordnung zwischen Metallschlauch und Balg empfehlen, so daß die gegenseitige Anlage dieser beiden Bauteile nicht unmittelbar, sondern mittelbar ausgebildet ist und durch ein an beide Bauteile anliegendes Zwischenelement beispielsweise in Form einer Ringeinlage hergestellt ist. Auch ein solches Zwischenelement kann durch Schweißen an Balg und/oder Metallschlauch festgelegt sein. Das Zwischenelement bietet den Vorteil, daß weder Balg noch Metallschlauch in der Form verändert werden müssen, wodurch sich eine einfache und kostengünstige Lösungsvariante zur Verfügung stellen läßt, die dennoch die erfindungsgemäßen Vorteile einer Schwingungsveränderung und Geräuschunterdrückung des Leitungselementes ermöglicht.

Was die Position der gegenseitigen Anlage betrifft, so wurde vorstehend schon darauf hingewiesen, daß es besonders empfehienswert ist, diese an die Schwingungsform von Balg und/oder Metallschlauch anzupassen. Vorteilhafterweise kann man hierbei insbesondere die Position der Maxima der Schwingungsformen von Balg und/oder Metallschlauch berücksichtigen, um hierdurch schon mit wenigen Anlagebereichen eine ausreichende Geräuschreduzierung des Leitungselementes zu erzielen.

Am einfachsten wird die gegenseitige Anlage wohl in etwa der Hälfte der Axiallänge des flexiblen Leitungselementes erfolgen, dies zumindest dann, wenn eine relativ gleichmäßige Schwingungsverteilung über die axiale Länge des Leitungselementes auftritt.

Was schließlich die insgesamte Gestaltung des Leitungselementes betrifft, so kann in an sich bekannter Weise vorgesehen werden, daß der Balg mit einem ihn unmittelbar umgebenden Geflechtsschlauch aus Metalldraht versehen ist, und daß Balg und Geflechtsschlauch endständig zur Bildung der Anschlußenden des Leitungselementes innerhalb eines zylindrischen Stützringes miteinander und mit diesem verpreßt und die Teile gegenseitig durch Anheften verbunden sind. Ein solcher äußerer Geflechtsschlauch dient dem äußeren Schutz des Balges und im übrigen dessen Abstützung gegen unerwünschte Längenvergrößerung.

Für die Herstellung des Metalischlauches kann vorgesehen sein, daß dieser als aus einem Metallband ohne Dichtungseinlage gewickelter Schlauch ausgebildet ist, wobei der Metallschlauch an seinen innerhalb der Balganschlußenden gelegenen Endstücken unter Zusammendrücken des Schlauchprofils und Ausgleich der Toleranzen gegenüber den Balganschlußenden radial aufgeweitet sein kann.

Weitere erfindungswesentliche Merkmale und Vorteile der vorliegenden Erfindung ergeben sich aus der nachfolgenden Beschreibung von Ausführungsbeispielen anhand der Zeichnung; hierbei zeigen
- Figuren 1 - 5: ein flexibles Leitungselement mit aufgeweitetem Metallschlauch in teilweise geschnittenen Seitenansichten;
- Figuren 6 - 8: ein flexibles Leitungselement mit eingeschnürtem Balg in teilweise geschnittenen Seitenansichten; und
- Figuren 9 - 11: ein Leitungselement mit zwischengefügter Ringeinlage in teilweise geschnittener Seitenansicht.

Nachfolgend sind gleiche Bauteile mit gleichen Bezugszeichen versehen, selbst wenn sie konstruktive Unterschiede aufweisen.

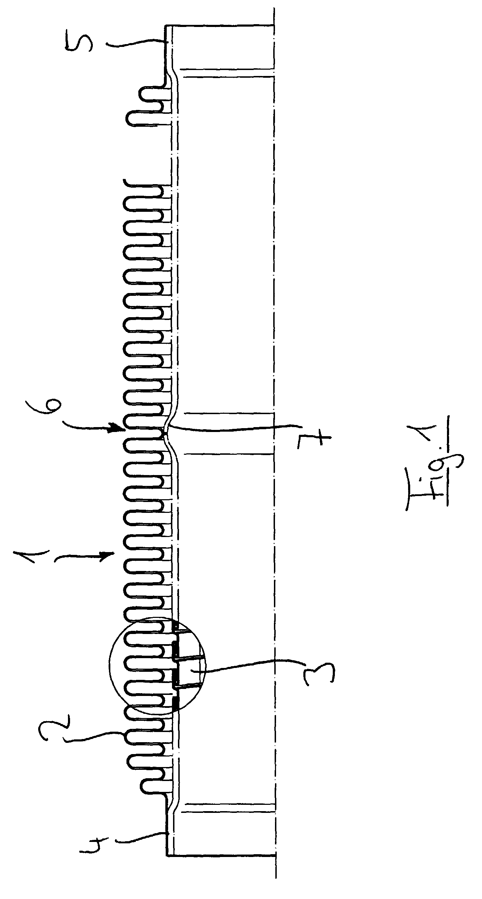

Demgemäß besteht ein in Figur 1 dargestelltes Leitungselement 1 aus einem ringgewellten Metallbalg 2 sowie einem sich koaxial innerhalb des Balges erstreckenden schraubengangförmig gewickelten Metallschlauch 3, die beide im Bereich von zylindrischen Anschlußenden 4, 5 aneinander durch Schweißen festgelegt sind. Hierzu sind sie im Bereich dieser Anschlußenden mit ihrem Durchmesser derart aneinander angepaßt, daß sie sich in vollflächiger Anlage befinden, was beispielsweise durch gegenseitiges Verpressen erfolgen kann. Dabei wird der ansonsten zwischen Balg und Metallschlauch bestehende Zwischenraum, der dadurch gebildet wird, daß der Metallschlauch einen Außenquerschnitt aufweist, der kleiner als der lichte Innenquerschnitt des Balges ist, aufgehoben.

Im Bereich zwischen den beiden Anschlußenden ist in Figur 1 ein Anlagebereich 6 vorgesehen, in dem sich Metallschlauch und Balg in gegenseitiger, über den Umfang umlaufender Anlage befinden, wobei diese Anlage durch eine Schweißverbindung unterstützt werden kann. Durch diese gegenseitige Anlage wird die axiale Länge der frei beweglichen Teile des Leitungselementes halbiert und hierdurch die Größe der Schwingungsamplituden entsprechend reduziert. Somit läßt sich verhindern, daß durch gegenseitige Relativbewegungen Metallschlauch und Balg gegeneinanderschlagen, was zu unerwünschten Geräuschentwicklungen führen würde.

Im Beispiel aus Figur 1 ist die gegenseitige Anlage 6 durch eine radiale umlaufende Aufweitung des Metallschlauches 7 hergestellt, der in seinem Außendurchmesser soweit vergrößert ist, bis er in spielfreie Anlage an den Balg gelangt.

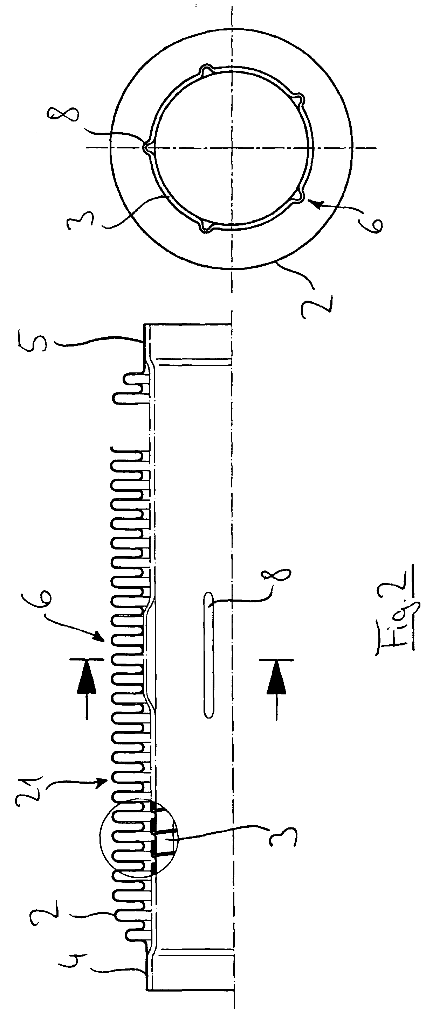

Beim Beispiel aus Figur 2 ist in einem Leitungselement 21 ebenfalls eine radiale Aufweitung des Metallschlauches 3 vorgesehen, wobei diese Aufweitung jedoch nicht über den gesamten Umfang umläuft, sondern - wie aus dem in Figur 2 rechts dargestellten Querschnitt des Leitungselementes erkennbar ist - durch beispielsweise fünf parallel zueinander und zur Schlauchachse verlaufenden längliche nutähnliche Aufweitungen 8 gebildet sind. Hierdurch ergeben sich über den Umfang des Leitungselementes nur fünf Anlagebereiche, wobei die gegenseitige Anlage auch nur in reibender und nicht in verschweißter Weise erfolgt.

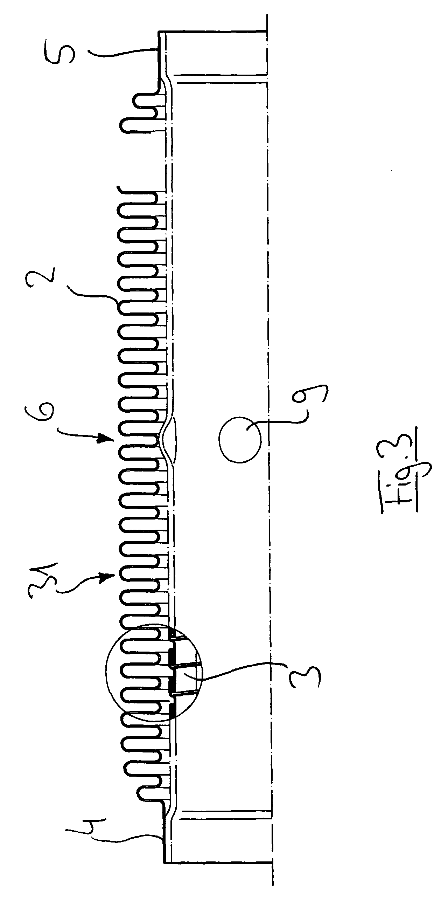

In ähnlicher Weise wie beim Leitungselement 21 aus Figur 2 ist bei einem Leitungselement 31 in Figur 3 eine partielle Anlage 6 dadurch gebildet, daß punktförmige Ausbeulungen 9 über den Umfang des Metallschlauches 3 verteilt angeordnet sind. Diese haben im übrigen eine ähnliche Wirkung wie die linienförmigen Aufweitungen 8 aus Figur 2.

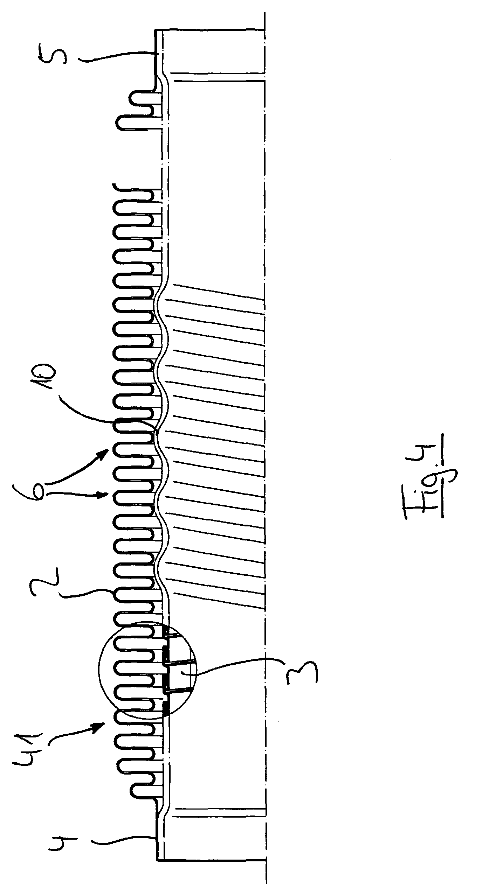

In Figur 4 ist wiederum ein Leitungselement 41 dargestellt, bei dem der Metallschlauch 3 schraubengangförmige, umlaufende Aufweitungen 10 aufweist, durch die sich mehrere benachbarte Anlagebereiche 6 ergeben. Durch eine solche Schraubengangform läßt sich die Montage von Metallschlauch und Balg dadurch vereinfachen, daß beide beim Ineinanderstecken entsprechend der Drehrichtung der Schraubengangform verdreht werden.

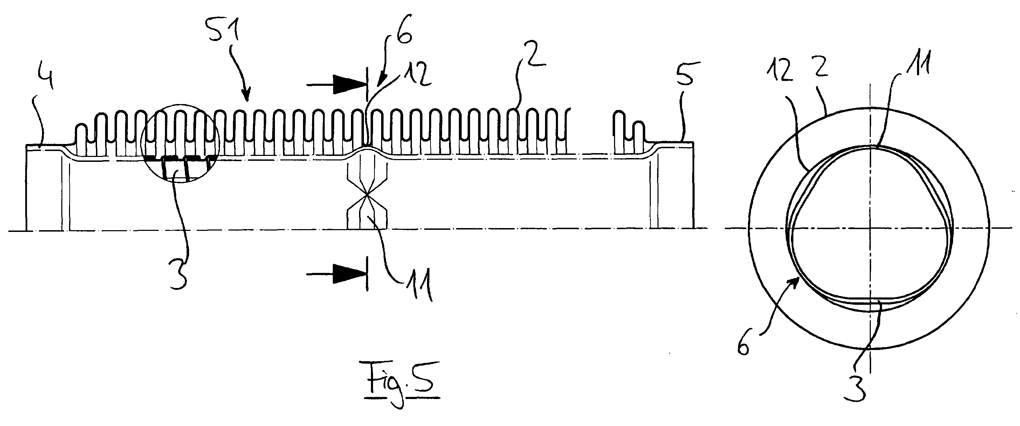

Figur 5 zeigt schließlich als letztes Beispiel eines aufgeweiteten Metallschlauches ein Leitungselement 51, dessen Metallschlauch 3 eine polygonförmige Aufweitung 11 besitzt, wie insbesondere aus dem Querschnitt erkennbar ist, der in Figur 5 rechts dargestellt ist. Hierdurch ergeben sich drei partielle Anlagebereiche 6 über den Schlauchumfang und somit die Möglichkeit einer gegenseitigen Vorspannung, die die spielfreie gegenseitige Anlage auch über eine lange Lebensdauer gewährleistet. Beim Leitungselement 51 ist die gegenseitige Anlage neben einer Verformung des Metallschlauches aber auch durch eine Querschnittsreduzierung des Balges 2 gebildet, dessen Wellental 12 im Anlagebereich 6 einen geringeren Innendurchmesser aufweist als die restlichen Wellentäler des Schlauches 2.

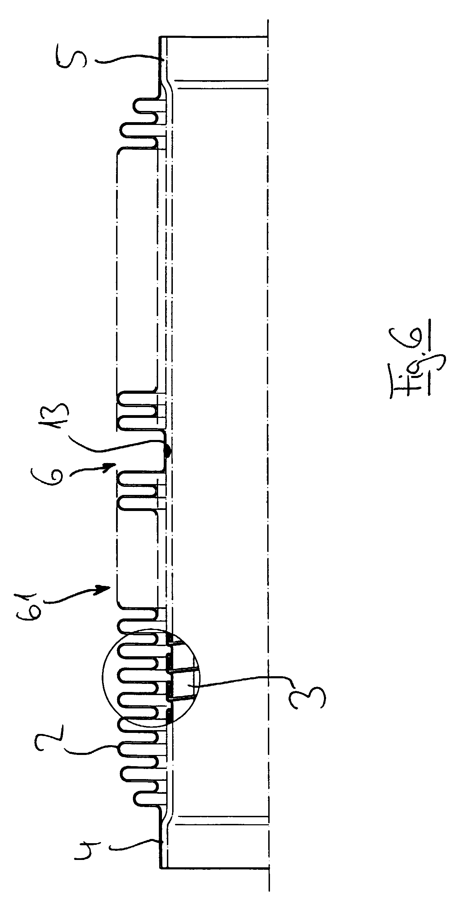

In ähnlicher Weise ist in Figur 6 ein Wellental 13 eines Balges 2 eines Leitungselementes 61 weiter als die benachbarten Wellentäler nach innen gezogen und zur Vergrößerung des Anlagebereiches noch dazu mit einer größeren Axialerstreckung ausgebildet und mit dem Metallschlauch 3 im Anlagebereich verschweißt oder verpreßt.

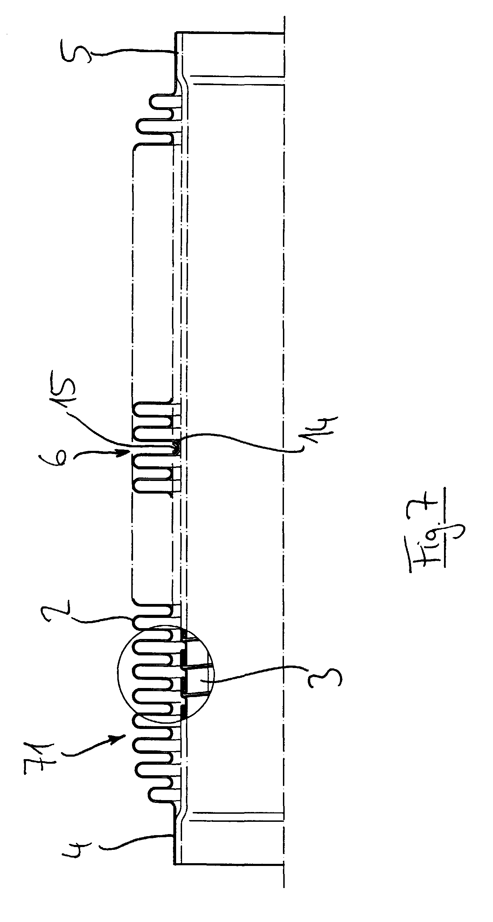

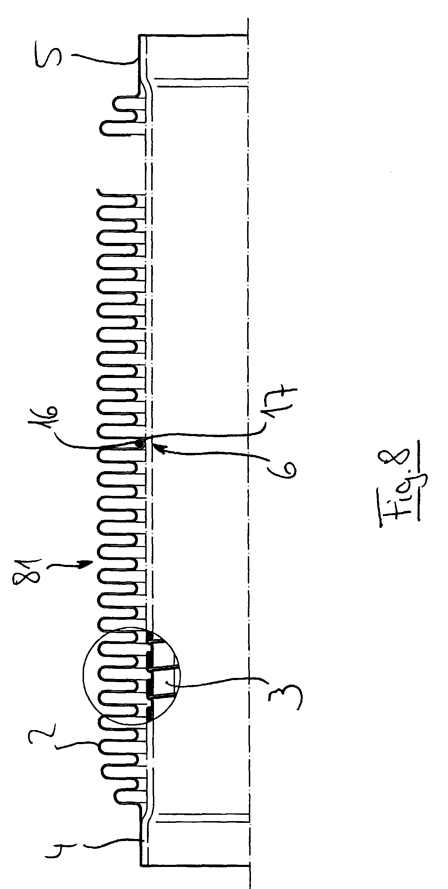

Das Leitungselement 71 aus Figur 7 weist ebenfalls im Anlagebereich 6 ein Wellental 14 mit reduziertem Innendurchmesser auf, wobei dort zur Erhöhung der gegenseitigen Anpressung auf der Außenseite des Wellentales 14 ein Federring 15 vorgesehen ist, der ähnlich wie ein Federring 16 bei einem Leitungselement 81 aus Figur 8, welcher ebenfalls in einem Wellental 17 mit reduziertem Querschnitt angeordnet ist, mit dem angrenzenden Bereich des Metallschlauches 3 verschweißt werden kann.

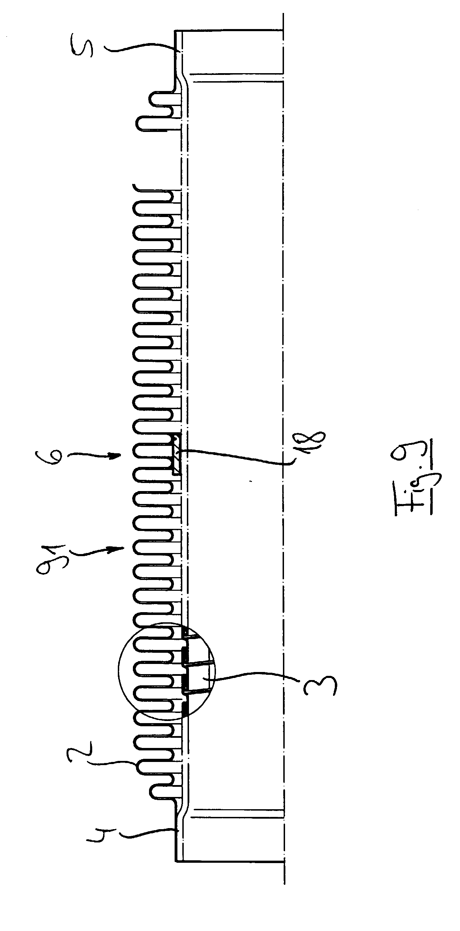

Figur 9 zeigt ein Leitungselement 91, das im Anlagebereich 6 eine Ringeinlage 18 aufweist, die zwischen Metallschlauch 3 und Balg 2 eingefügt ist und den gegenseitigen Abstand spielfrei überbrückt. Hierdurch werden Metallschlauch und Balg in mittelbare gegenseitige Anlage gebracht, wobei zur Fixierung dieser Anlage der Balg 3 mit der Ringeinlage 18 partiell verschweißt ist.

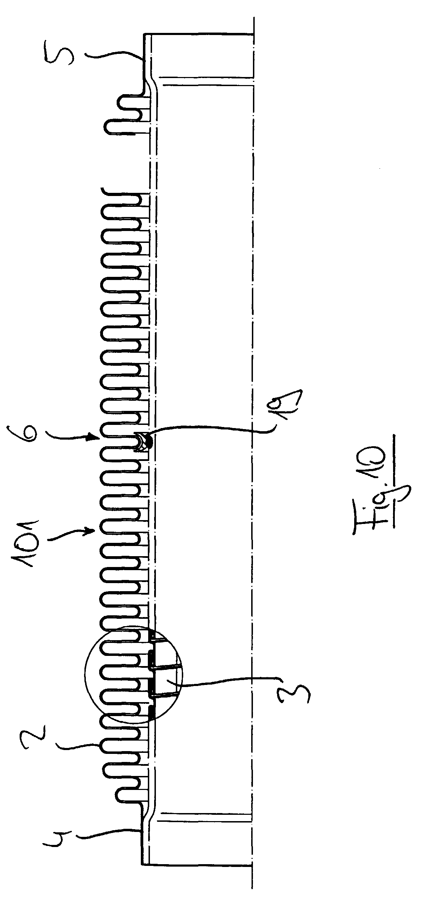

Auch das in Figur 10 dargestellte Leitungselement 101 weist eine Ringeinlage 19 auf, die zwischen Balg und Metallschlauch angeordnet ist, den gegenseitigen Abstand überbrückt und mit dem Metallschlauch 3 verschweißt ist. Während die Ringeinlage 18 aus Figur 9 eine einfach Zylinderform besitzt, weist die Ringeinlage 19 auf Figur 10 eine der Innenform des Wellentales im Bereich des Anlagebereiches 6 angepaßte Außenform auf, wodurch sich die gegenseitige Anlagefläche vergrößern läßt.

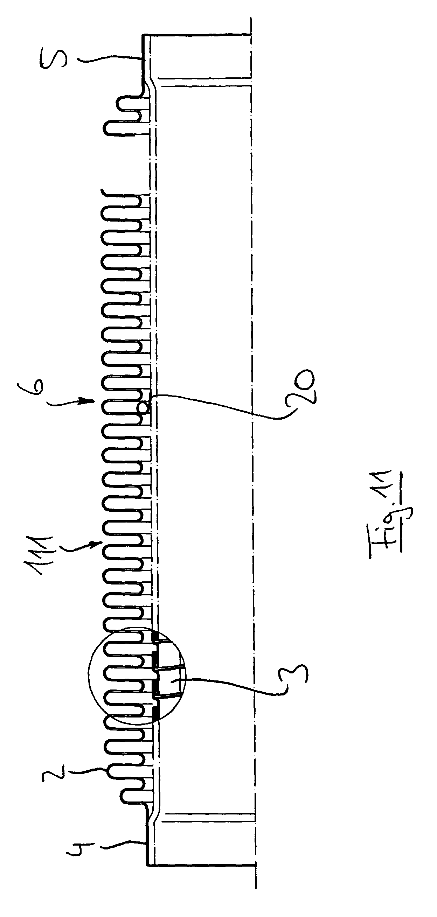

Schließlich ist in Figur 11 ein Leitungselement 111 mit einer Ringeinlage 20 dargestellt, die zwischen Metallschlauch 3 und Balg 2 angeordnet ist und auf ihrer Innenseite am Metallschlauch 3 festgelegt ist. Auf der Außenseite besitzt die Ringeinlage 20 einen abgebogenen und gekrümmten Verlauf, der in ein Wellental 22 im Anlagebereich 6 eingreift und die gegenseitige Anlage durch eine elastische Vorspannung zur Verfügung stellt. Dieses Ringelement weist mehrere über den Umfang verteilte abgebogene Federbereiche auf, die den Vorteil haben, daß sie aufgrund ihrer Nachgiebigkeit eine Montage von Metallschlauch und Balg vereinfachen, wenn der Metallschlauch von der richtigen Richtung, also in Figur 11 von links in den Balg eingesteckt wird.

Zusammenfassend bietet die vorliegende Erfindung den Vorteil, daß das erfindungsgemäße Leitungselement bei reduziertem Bauraum und reduziertem Materialaufwand dennoch eine erhebliche Geräuschreduzierung ermöglicht, indem Metallschlauch und Balg in definierte Anlage gebracht werden.

## Patentansprüche

1. Flexibles Leitungselement, insbesondere für Abgasleitungen für Abgasleitungen von Verbrennungsmotoren bei Kraftfahrzeugen, mit einem mit zylindrischen Anschlußenden versehenen, schraubengangförmig oder ringgewellten Balg aus Metall und einem koaxial innerhalb des Balges angeordneten schraubengangförmig gewickelten Metallschlauch, dessen Außenquerschnitt kleiner als der lichte Innenquerschnitt des Balges ist und der mit seinem innerhalb der Balganschlußenden gelegenenen Endstücken zumindest mittelbar an den Balganschlußenden festgelegt ist,
dadurch gekennzeichnet,
daß der Balg (2) und der Metallschlauch (3) in wenigstens einem weiteren, zwischen den beiden Anschlußenden (4, 5) liegenden Bereich (6) in gegenseitige zumindest partielle und zumindest mittelbare Anlage gebracht sind.

2. Leitungselement nach Anspruch 1,
dadurch gekennzeichnet,
daß die gegenseitige Anlage durch Umformung von Balg (2) und/oder Metallschlauch (3) hergestellt ist.

3. Leitungselement nach Anspruch 2,
dadurch gekennzeichnet,
daß die Umformung durch eine wenigstens partielle radiale Aufweitung (7, 8, 9, 10, 11) des Metallschlauches (3) hergestellt ist.

4. Leitungselement nach Anspruch 2,
dadurch gekennzeichnet,
daß die Umformung durch eine wenigstens partielle radiale Einschnürung (12, 13, 14, 17) des Balges (2) hergestellt ist.

5. Leitungselement nach zumindest einem der vorstehenden Ansprüche 2 bis 5,
dadurch gekennzeichnet,
daß sich die Umformung über den gesamten Umfang von Balg (2) und/oder Metallschlauch (3) erstreckt.

6. Leitungselement nach zumindest einem der vorstehenden Ansprüche,
dadurch gekennzeichnet,
daß Balg (2) und Metallschlauch (3) in gegenseitige reibende Anlage gebracht sind.

7. Leitungselement nach zumindest einem der vorstehenden Ansprüche 1 bis 5,
dadurch gekennzeichnet,
daß Balg (2) und Metallschlauch (3) im Anlagebereich (6) aneinander festgelegt sind, und daß das Festlegen insbesondere durch Verschweißen oder Verpressen erfolgt.

8. Leitungselement nach zumindest einem der vorstehenden Ansprüche,
dadurch gekennzeichnet,
daß die gegenseitige Anlage von Balg (2) und Metallschlauch (3) mittelbar ausgebildet ist und durch ein zwischen Balg und Metallschlauch angeordnetes und an diesen anliegendes Zwischenelement (18, 19, 20) hergestellt ist.

9. Leitungselement nach Anspruch 8,
dadurch gekennzeichnet,
daß das Zwischenelement (18, 19, 20) aus einer Ringeinlage besteht.

10. Leitungselement nach zumindest einem der vorstehenden Ansprüche 8 bis 9,
dadurch gekennzeichnet,
daß das Zwischenelement (18, 19, 20) an Balg (2) und/oder Metallschlauch (3) durch Schweißen festgelegt ist.

11. Leitungselement nach zumindest einem der vorstehenden Ansprüche,
dadurch gekennzeichnet,
daß die Position (6) der zumindest partiellen Anlage an die Schwingungsform von Balg (2) und/oder Metallschlauch angepaßt ist und sie insbesondere der Position des Maximums der Schwingungsform von Balg und/oder Metallschlauch entspricht.

12. Leitungselement nach zumindest einem der vorstehenden Ansprüche,
dadurch gekennzeichnet,
daß die Position (6) der zumindest partiellen Anlage in etwa der Hälfte der Axiallänge des flexiblen Leitungselementes (1, 21 bis 111) entspricht.

13. Leitungselement nach zumindest einem der vorstehenden Ansprüche,
dadurch gekennzeichnet,
daß zwei oder mehrere partielle Anlagepositionen (6) über den Umfang und/oder die axiale Länge von Balg (2) und Metallschlauch (3) verteilt angeordnet sind.
